# EUROPEAN PATENT APPLICATION

(11) **EP 4 455 768 A1**
(43) Date of publication of application: **30.10.2024**
(21) Application number: 22910499.7
(22) Date of filing: 26.09.2022
(51) Int. Cl.: G02C 7/00, B23K 26/00, G02B 1/115

(54) **METHOD FOR MANUFACTURING OPTICAL MEMBER, OPTICAL MEMBER, AND EYEGLASSES**

(30) Priority: 22.12.2021 JP 2021207963
(71) Applicant: Hoya Lens Thailand Ltd., Pathumthani 12130 (TH)
(72) Inventor: OOKUBO, Shigeki, Tokyo 160-8347 (JP)
(74) Representative: Betten & Resch
(86) International application number: PCT/JP2022/035740
(87) International publication number: WO 2023/119773

(57) **Abstract**

There is provided a method for manufacturing an optical member, and a related technique, the method including: applying desired laser processing to an anti-reflection film formed to coat an optical surface of an optical base material and having a multilayer structure including laminated layers of a low refractive index layer and a high refractive index layer, by irradiating the anti-reflection film with ultrashort pulse laser; and partially removing a predetermined layer including an outermost layer of the multilayer structure, the ultrashort pulse laser having a pulse width of 10 femtoseconds or more and less than 100 picoseconds, the anti-reflection film including a reactive layer that is relatively more reactive to irradiation with the ultrashort pulse laser than other layers included in the multilayer structure, wherein the reactive layer is subjected to the laser processing so as to be visually recognizable by visible light by being at least partially removed.

## Description

### Technical Field

The present invention relates to a method for manufacturing an optical member, an optical member, and spectacles.

### Description of related art

Some spectacle lenses are constituted by coating an optical surface of a lens base material with a thin film such as a hard coat film or an anti-reflection film. In recent years, it has been proposed to apply marking on a spectacle lens by partially removing some layers of the thin film by laser irradiation (for example, see Patent Document 1).

### Prior art document

### Patent document

[Patent Document 1] Japanese Patent Publication No. 2019-523447

### Summary of the invention

### Problem to be solved by the invention

With a conventional marking using laser irradiation, it is not easy to precisely remove only some layers of the thin film, and there is also a risk of damaging underlying layers below the layer to be removed, such as a lens base material and other layers constituting the thin film. Therefore, when applied to a spectacle lens product, there is a concern that quality may be deteriorated.

An object of the present disclosure is to provide a technique for applying marking on an optical member without deteriorating the quality of the optical member.

### Means for solving the problem

According to a first aspect of the present invention, there is provided a method for manufacturing an optical member, including:
applying desired laser processing to an anti-reflection film formed to coat an optical surface of an optical base material and having a multilayer structure including laminated layers of a low refractive index layer and a high refractive index layer, by
irradiating the anti-reflection film with ultrashort pulse laser; and
partially removing a predetermined layer including an outermost layer of the multilayer structure,
the ultrashort pulse laser having a pulse width of 10 femtoseconds or more and less than 100 picoseconds,
the anti-reflection film including a reactive layer that is relatively more reactive to irradiation with the ultrashort pulse laser than other layers included in the multilayer structure,
wherein the reactive layer is subjected to the laser processing so as to be visually recognizable by visible light by being at least partially removed.

According to a second aspect of the present invention, there is provided the method for manufacturing an optical member according to the first aspect, wherein in the removal of the reactive layer, the reactive layer disappears by subliming or evaporating at least partially in a thickness direction, and the disappearance of the reactive layer causes other overlying layer above the reactive layer also to be removed.

According to a third aspect of the present invention, there is provided the method for manufacturing an optical member of the first or second aspect, wherein a high refractive index layer included in the multilayer structure is exposed at an irradiated portion where the reactive layer is removed by the irradiation.

According to a fourth aspect of the present invention, there is provided the method for manufacturing an optical member according to any one of the first to third aspects, wherein the reactive layer is a conductive layer having higher conductivity than other layers constituting the multilayer structure.

According to a fifth aspect of the present invention, there is provided the method for manufacturing an optical member of any one of the first to fourth aspects, wherein the reactive layer contains Sn and O.

According to a sixth aspect of the present invention, there is provided the method for manufacturing an optical member of any one of the first to fifth aspects, wherein the optical member is a spectacle lens.

According to a seventh aspect of the present invention, there is provided the method for manufacturing an optical member of any one of the first to sixth aspects, wherein the ultrashort pulse laser has a pulse width of 0.1 picoseconds or more and less than 50 picoseconds.

According to an eighth aspect of the present invention, there is provided an optical member, including:
an optical base material with an optical surface; and
an anti-reflection film coating the optical surface of the optical base material,
the anti-reflection film having a multilayer structure including laminated layers of a low refractive index layer and a high refractive index layer, and
the anti-reflection film including a reactive layer that has a relatively higher reactivity to ultrashort pulse laser irradiation than other layers included in the anti-reflection film,
wherein a removed portion is a portion resulting from at least partially removing a predetermined layer including an outermost layer of the multilayer structure, to which processing is applied so as to be visually recognizable by visible light, due to exposure of the underlying high refractive index layer below the reactive layer or exposure of the partially remained reactive layer.

According to a nineth aspect of the present invention, there is provided the optical member according to the eighth aspect, wherein the high refractive index layer exposed by removing the low refractive index layer is constituted so that a ratio t1/t2 of a thickness t1 at a removed portion of the low refractive index layer to a thickness t2 at a non-removed portion of the low refractive index layer falls within a range of 0.90 or more and 1.00 or less.

According to a tenth aspect of the present invention, there is provided the optical member of the eighth or nineth aspect, wherein the processing for visually recognizing the reactive layer is a processing for the reactive layer to be visible from a processing surface side of the optical member subjected to the processing, and is also visible from a back side of the processing surface.

According to an eleventh aspect of the present invention, there is provided the optical member of any one of the eighth to tenth aspects, wherein visibility in the processing for visually recognizing the reactive layer changes depending on a relative position or an angle of an observer and an illumination light with respect to the optical member.

According to a twelfth aspect of the present invention, there is provided the optical member of any one of the eighth to eleventh aspects, wherein the optical member is a spectacle lens.

According to a thirteenth aspect of the present invention, there is provided a spectacle lens that is an optical member manufactured by the method for manufacturing the optical member according to any one of the first to seventh aspects, or a spectacle lens in which the spectacle lens, which is the optical member according to any one of the eighth to twelfth aspects, is fitted into a frame.

### Advantage of the invention

According to the present invention, marking on an optical member is enabled without deteriorating a quality of the optical member.

### Brief description of the drawings

FIG. 1 is a plan view showing an example of processing a spectacle lens according to one embodiment of the present invention.
FIG. 2 is a flow chart showing an example of a procedure of a method for manufacturing a spectacle lens according to one embodiment of the present invention.
FIG. 3 is a side sectional view showing an example of a multilayer structure of thin films in a spectacle lens according to one embodiment of the present invention.
FIG. 4A is an explanatory view showing a schematic configuration example of a laser processing device used in a method for manufacturing a spectacle lens according to one embodiment of the present invention, in which a laser beam source unit, an AOM (Acousto Optics Modulator) system unit, a beam shaper unit, a galvano scanner unit, and an optical system are included, and showing a configuration in which the AR film is irradiated with laser beam through each of these units.
FIG. 4B is an explanatory view showing a schematic configuration example of a laser processing device used in the method for manufacturing a spectacle lens according to one embodiment of the present invention, and showing a configuration in which the AR film is irradiated with laser beam (that is, ultrashort pulse laser) through an optical system, etc., with a defocus setting.
FIG. 5A is an explanatory view showing a configuration example of a main part of a spectacle lens according to one embodiment of the present invention and is an explanatory view showing a configuration example of a main part of a spectacle lens according to one embodiment of the present invention.
FIG. 5B is an explanatory view showing a configuration example of a main part of a spectacle lens according to one embodiment of the present invention and showing one specific example of an observation result of a cross section of the AR film using an electron microscope.
FIG. 6A is a micrograph (magnification: 200x) showing the results of a test for forming a dot pattern on the AR film of the spectacle lens 1 shown in FIG. 5B, with a wavelength of the laser beam set as 1064 nm, and a pulse width set as 100 femtoseconds or more and less than 1 picosecond.
FIG. 6B is a micrograph (magnification: 200x) showing the results of a test for forming a dot pattern on the AR film of the spectacle lens 1 shown in FIG. 5B, with a wavelength of the laser beam set as 532 nm, and a pulse width set as 100 femtoseconds or more and less than 1 picosecond.
FIG. 7A is a micrograph (magnification: 200x) showing the results of a test for forming a dot pattern on the AR film of the spectacle lens 1 shown in FIG. 5B, with a wavelength of the laser beam set as 1064 nm, and a pulse width set as 10-odd picoseconds.
FIG. 7B is a micrograph (magnification: 200x) showing the results of a test for forming a dot pattern on the AR film of the spectacle lens 1 shown in FIG. 5B, with a wavelength of the laser beam set as 532 nm, and a pulse width set as 10-odd picoseconds.
FIG. 7C is a micrograph (magnification: 200x) showing the results of a test for forming a dot pattern on the AR film of the spectacle lens 1 shown in FIG. 5B, with a wavelength of the laser beam set as 355 nm, and a pulse width set as 10-odd picoseconds.
FIG. 8A is a micrograph (magnification: 50x) showing the results of a test for forming overlapping dot patterns on the AR film of the spectacle lens 1 shown in FIG. 5B, with a wavelength of the laser beam set as 355 nm, and a pulse width set as 10-odd picoseconds.
FIG. 8B is a micrograph (magnification: 200x) showing the results of a test for forming overlapping dot patterns on the AR film of the spectacle lens 1 shown in FIG. 5B, with a wavelength of the laser beam set as 532 nm, and a pulse width set as 10-odd picoseconds.
FIG. 9A is a micrograph (magnification: 50x) showing the results of a test for forming a dot pattern on the AR film of the spectacle lens 1 shown in FIG. 5B, with a wavelength of the laser beam set as 355 nm, and a pulse width set as several tens of nanoseconds.
FIG. 9B is a micrograph (the left image has a magnification of 50x, and four right images have a magnification of 500x) showing the results of a test for forming a dot pattern on the AR film of the spectacle lens 1 shown in FIG. 5B, with a wavelength of the laser beam set as 266 nm, and a pulse width set as several tens of nanoseconds.

### Detailed description of the invention

Embodiments of the present invention will be described below based on the drawings.

In the present embodiment, the following explanation will be given using an example in which the optical member is a spectacle lens.

A spectacle lens has an object-side surface and an eyeball-side surface as optical surfaces. The "object-side surface" is a surface located on an object side when spectacles equipped with spectacle lenses are worn by a wearer. The "eyeball-side surface" is the opposite, that is, the surface located on an eyeball side when spectacles equipped with spectacle lenses are worn by a wearer. Generally, the object-side surface is a convex surface and the eyeball-side surface is a concave surface, that is, a spectacle lens is a meniscus lens.

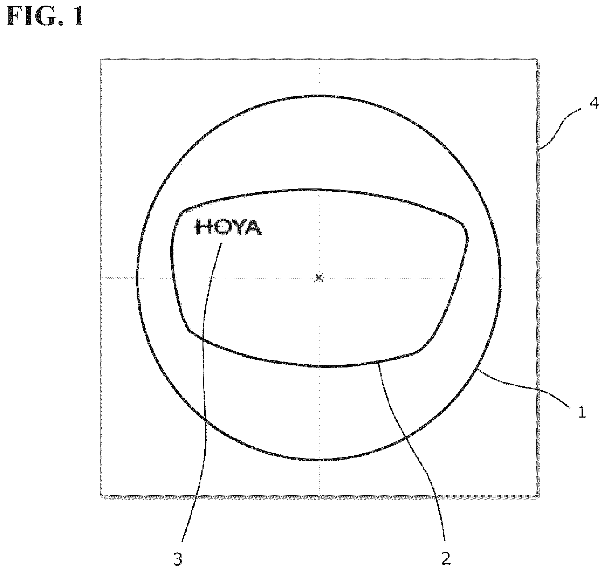

FIG. 1 is a plan view showing an example of processing a spectacle lens according to the present embodiment. In the present embodiment, a spectacle lens 1 having a circular shape in plan view (for example, an outer diameter of 60 to 80 mm) is subjected to spherical processing (frame cutting processing) in which an outer shape of the lens is cut to match a frame shape 2 of a spectacle frame worn by a wearer, and before or after that, marking of a decorative pattern 3 representing a logo, house-mark, letters, symbols, designs, etc., is applied on the optical surface so that the decorative pattern is located within a lens area after frame cutting.

It is conceivable that the marking of the decorative pattern 3 is performed using, for example, laser irradiation processing that allows precise control of an irradiation position based on digital data. However, it is undesirable for the marking to cause deterioration in lens quality and functionality. Therefore, in the present embodiment, the marking of the decorative pattern 3 is performed by a processing procedure described below.

### (1) Method for manufacturing a spectacle lens

Here, a procedure for processing a spectacle lens including marking of a decorative pattern, that is, a procedure for the method for manufacturing a spectacle lens according to the present embodiment will be specifically described.

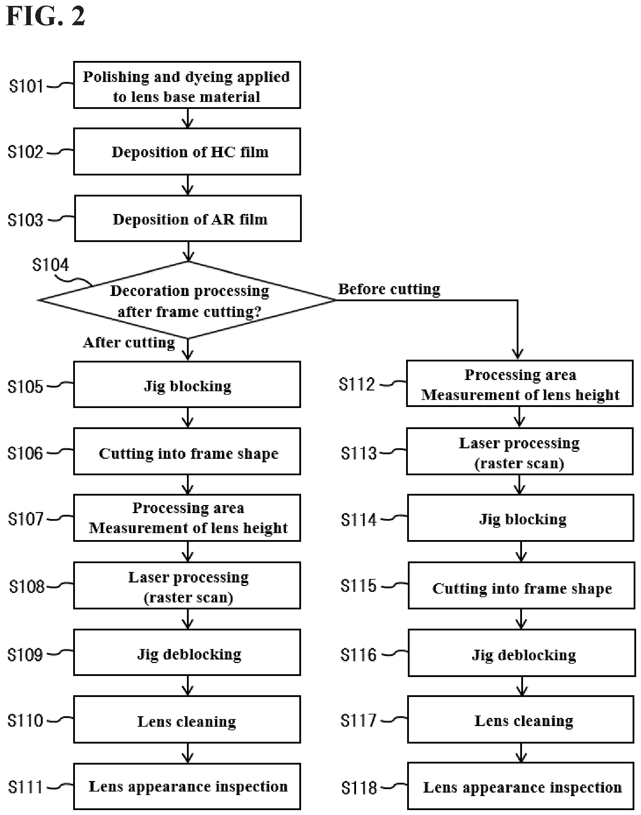

FIG. 2 is a flowchart showing an example of the procedure for the method for manufacturing a spectacle lens according to the present embodiment.

In manufacturing a spectacle lens, first, a lens base material, which is an optical base material, is prepared, and then the lens base material is polished according to prescription information of a spectacle wearer, and a dyeing processing is performed as necessary (step 101, hereinafter the step is abbreviated as "S").

As the lens base material, for example, a resin material having a refractive index (nD) of about 1.50 to 1.74 is used. specifically, examples of the resin material include allyl diglycol carbonate, urethane resin, polycarbonate, thiourethane resin, and episulfide resin. However, instead of these resin materials, the lens base material may be composed of other resin materials that provide a desired degree of refraction or may be composed of inorganic glass. Further, the lens base material has optical surfaces for configuring a predetermined lens shape on each of the object-side surface and the eyeball-side surface. The predetermined lens shape may constitute any of a single focus lens, a multifocal lens, a progressive power lens, etc. In any case, each optical surface is constituted by a curved surface specified based on the prescription information of a spectacle wearer. The optical surface is formed, for example, by a polishing processing, but may be a cast (molded) product that does not require a polishing processing.

The polishing processing and dyeing processing for the lens base material may be performed using a known technique, and detailed description thereof will be omitted here.

Thereafter, a hard coat film (HC film) is formed on at least one optical surface of the lens base material, preferably on both optical surfaces (S102).

The HC film is, for example, a film formed using a curable material containing a silicon compound and has a thickness of about 3 µm to 4 µm. The refractive index (nD) of the HC film is close to the refractive index of the material of the lens base material described above, for example, about 1.49 to 1.74, and a film configuration is selected depending on the material of the lens base material. By coating with such an HC film, the durability of the spectacle lens can be improved.

The HC film may be deposited, for example, by a dipping method using a solution in which a curable material containing a silicon compound is dissolved.

After the HC film is formed, an anti-reflection film (AR film) is subsequently formed so as to overlap the HC film (S103).

The AR film has a multilayer structure in which films with different refractive indexes are laminated and is a film that prevents reflection of light by interference. Specifically, the AR film has a multilayer structure in which a low refractive index layer and a high refractive index layer are laminated. The low refractive index layer is composed of silicon dioxide (SiO₂) having a refractive index of about 1.43 to 1.47, for example.

Further, the high refractive index layer is composed of a material having a higher refractive index than the low refractive index layer, and is constituted using, for example, zirconium oxide (ZrOz), tin oxide (SnOz), niobium oxide (Nb₂O₅), tantalum oxide (Ta₂O₅), titanium oxide (TiOz), yttrium oxide (Y₂O₃), aluminum oxide (Al₂O₃), mixtures thereof (e.g. indium tin oxide) (ITO)) etc.

Among these, the high refractive index layer containing Sn and O has greater reactivity to ultrashort pulse laser, which will be described later, than other layers, and thus functions as a reactive layer. Specifically, the above-described SnO₂ layer and ITO layer correspond to this high refractive index layer.

The term "reactive layer" as used herein refers to a layer having low excitation energy when irradiated with a laser beam. In one embodiment of the present invention, ultrashort pulse laser irradiation is performed. The SnOz layer, which can serve as a reactive layer, has extremely low excitation energy due to multiphoton absorption (for example, two-photon absorption) and is highly reactive. This also applies to the ITO layer, and the ITO layer can also serve as the reactive layer in this specification.

As a result, in one embodiment of the present invention, the SnOz layer (or ITO layer) sublimes or evaporates and disappears from an irradiation area together with the overlying SiOz layer. A reactive layer that is relatively more reactive than other layers included in the multilayer structure refers to the SnOz layer or the ITO layer according to one embodiment of the invention. This reactive layer may be set as a reactive layer having a highest reactivity than other layers included in the multilayer structure.

An outermost layer of the multilayered AR film is configured to be a low refractive index layer (for example, a SiOz layer). By coating with such an AR film, the visibility of the pattern formed by laser processing in the present embodiment can be improved due to a difference in visible light reflectance caused by irradiating with illumination light.

Further, an undermost layer (on the base material side) of the multilayer structure is also preferably a low refractive index layer (for example, SiOz layer).

The AR film may be deposited using, for example, ion-assisted deposition.

A water-repellent film may be deposited on the low refractive index layer that is an outermost layer of the AR film. The water-repellent film may also be referred to as an antifouling film. The water-repellent film may be deposited before marking is performed or after marking is performed according to the present embodiment.

The water-repellent film is a film that imparts water repellency to a surface and can be constituted by applying a fluorine-based compound solution such as metaxylene hexafluoride, for example.

The water-repellent film may be deposited by, for example, ion-assisted vapor deposition, as in the case of the AR film.

Further, other functional layer may be formed on the AR film. There is no problem whether such a functional layer contains a metal component or not, as long as the effect of precise processing by laser irradiation can be obtained. Further, such a functional layer may be a uniform film or may be scattered on the surface.

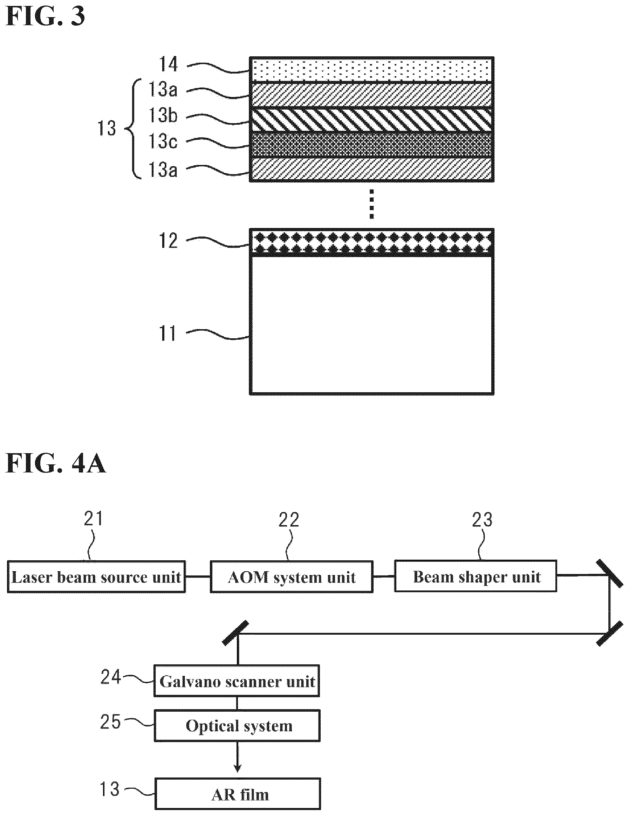

Through the film deposition processing as described above, a thin film having a multilayer structure as shown in FIG. 3 is formed on the optical surface of the lens base material.

FIG. 3 is a side sectional view showing an example of the thin film having a multilayer structure according to the present embodiment.

The multilayer structure in the example shown in the figure is constituted by laminating an HC film 12, an AR film 13, and a water-repellent film 14 in this order on the optical surface of a lens base material 11. The AR film 13 has a multilayer structure in which a SiOz layer 13a, which is a low refractive index layer, and a SnOz layer 13b and a ZrO₂ layer 13c, which are high refractive index layers, are laminated, with an outermost layer (that is, a surface layer on the side of the water-repellent film 14) set as the SiOz layer 13a.

Here, the SnOz layer is a high refractive index layer and also a reactive layer.

After the thin film is formed, as shown in FIG. 2, the spectacle lens with the thin film formed thereon is then subjected to frame cutting and decorative pattern marking. For example, when performing decoration processing after frame cutting (S104: after cutting), first, jig blocking is performed in which one optical surface of the spectacle lens to be processed (specifically, an optical surface that is not subjected to decoration processing, which will be described later) is placed on a dedicated jig (S105). Then, the blocked spectacle lens is set in a spherical processing machine, and spherical processing (frame cutting processing) is performed to the spectacle lens, to cut an outer shape of the spectacle lens into a frame shape (S106). Jig blocking and frame cutting may be performed using a known technique, so detailed description thereof will be omitted here.

After the frame cutting processing, decoration processing (that is, decorative pattern marking) is then performed. For the decoration processing, first, while in the blocked state, a lens height of a processing area (i.e., a three-dimensional shape of the processing area) of the processing surface of the spectacle lens to be processed (specifically, an optical surface on the non-blocking side), is measured (S107). Although a measurement method is not particularly limited, it is conceivable to use a non-contact three-dimensional measuring machine, for example.

The processing area is an area including a laser scan area, which will be described later.

After measuring the lens height of the processing area, laser processing is performed by irradiating the processing area with laser beam, and a raster scan is performed to move a laser beam irradiation position based on pattern data prepared in advance (S108). Vector scan may be used instead of raster scan. Thereby, decorative pattern marking is performed in the processing area of the processing surface of the spectacle lens. Details of the laser processing for performing decorative pattern marking will be described later.

After performing decorative pattern marking, jig deblocking is performed to remove the spectacle lens from the dedicated jig (S109), and lens cleaning is performed for the removed spectacle lens to remove residues and deposits (foreign objects) caused by marking (S110). After a final lens appearance inspection (S111), the manufacturing of the spectacle lens is completed.

On the other hand, for example, when frame cutting is performed after decoration processing (S104: before cutting), first, the lens height of the processing area (that is, the three-dimensional shape of the processing area) of the processing surface of the spectacle lens to be processed is measured (S112). The measurement method is the same as in the case where decoration processing is performed after frame cutting as described above.

After measuring the lens height of the processing area, laser processing is subsequently performed by irradiating the processing area with laser beam, and raster scan is performed in which the laser beam irradiation position is moved based on pattern data prepared in advance (S113). Vector scan may be used instead of raster scan. Thereby, the decorative pattern marking is applied to the processing area of the processing surface of the spectacle lens. Details of the laser processing for decorative pattern marking will be described later.

After applying the decorative pattern marking, frame cutting processing is performed for the marked spectacle lens. When performing frame cutting, jig blocking is first performed in which one optical surface of the spectacle lens to be processed is placed on a dedicated jig (S114), then, the blocked spectacle lens is set in a lens shape processing machine, to perform lens shape processing (frame cutting processing) to cut an outer shape of the spectacle lens into a frame shape (S115). After performing frame cutting processing, jig deblocking is performed to remove the spectacle lens from the dedicated jig (S116), and lens cleaning is performed for the removed spectacle lens, to remove residual materials, adhesion (foreign matter), etc., which are caused during processing (S117). After performing a final lens appearance inspection (S118), the manufacturing of the spectacle lens is completed.

### (2) Details of the laser processing

Next, laser processing during decorative pattern marking will be explained in more detail.

In the present embodiment, the decorative pattern marking is performed as follows. The AR film 13 coating the optical surface of the lens base material 11 is irradiated with a laser beam, thereby partially removing a predetermined layer including the SiOz layer 13a, which is an outermost layer of the AR film 13.

Specifically, when the laser beam that has passed through the outermost SiO₂ layer reaches an underlying SnOz layer below the SiOz layer, the SnOz layer sublimates or evaporates due to the energy of the irradiation, and disappears from an irradiated area together with the overlying SiOz layer. That is, a predetermined layer including the outermost SiO₂ layer 13a is partially removed by laser processing using laser beam irradiation. At this time, decorative pattern marking is applied to the irradiated area after passing through a removal processing for exposing the underlying high refractive index layer. Here, the exposed high refractive index layer is, for example, a ZrOz layer 13c.

The SnOz layer 13b having a thin thickness can be formed (for example, having a thickness of 3 to 20 nm, more preferably 3 to 10 nm). In the present embodiment, SnO₂ layer 13b having a thickness of 5 nm can be formed.

In the above, the SnOz layer functions as a reactive layer that is most reactive to laser irradiation. This reactive layer preferably contains Sn and O, and in addition to the SnOz layer, ITO layer can also be used.

Further, in the above, the SnOz layer is removed by sublimation or evaporation, and an underlying high refractive ZrOz layer below the SnOz layer is exposed to the irradiated area. However, the reactive layer does not necessarily need to be completely removed and may be partially remained at the irradiated area. For example, by laser irradiation, the reactive layer may be at least partially removed in the thickness direction of the layer. Further, as another example of the partial removal by laser irradiation, the reactive layer may be partially remained at the laser irradiated area not only in the thickness direction of the layer but also when viewed from the laser irradiation direction (planar view). In the example of this paragraph, it does not matter if ZrOz is only partially exposed. This is because, similarly to ZrOz, SnO₂ (or ITO) is also a high refractive material, and when the removed portion is viewed from above, even when SnOz partially remains, there will be no problem in visibility. Therefore, it is sufficient to expose the high refractive index layer underlying below the reactive layer or expose the partially remained reactive layer.

The phenomenon that occurs during laser irradiation can be considered as follows. The reactive layer (SnOz layer, ITO layer, etc.) is preferably a conductive layer that has higher conductivity than other layers included in the laminated structure.

According to the inventor's review, it is found that the reactive layer containing SnO₂ has a smaller energy corresponding to a band gap at which excitation occurs when the layer is subjected to laser irradiation under conditions described later, compared to the overlying SiOz layer (on the outermost surface side) and compared to the underlying ZrOz layer. Therefore, compared to the adjacent overlying and underlying layers, the reactive SnOz layer tends to disappear most quickly due to sublimation/evaporation.

At this time, it is considered that a phenomenon called multiphoton absorption (for example, two-photon absorption) occurs, and processing can be performed with extremely high energy efficiency. In this case, it seems that the conductive SnOz layer has an advantageous effect.

Regarding the concern that after the SnOz layer disappears, the underlying ZrOz layer may be damaged by evaporation or dissolution due to the energy of irradiation, it can be solved as follows. By controlling the irradiation conditions to take advantage of the delay before the damage occurs, substantially only the reactive layer and the overlying layer above the reactive layer can be removed, and ultrashort pulse laser is found to be advantageous, which will be described later, to control such a precise processing causing the phenomenon of multimolecular absorption described above.

Here, a laser processing device used for laser processing will be briefly explained.

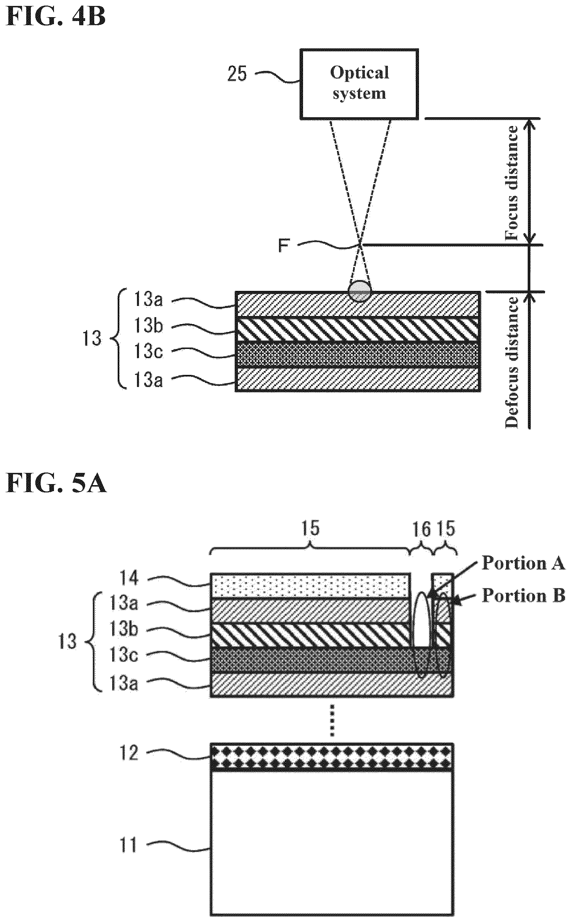

FIG. 4 is an explanatory view showing a schematic configuration example of a laser processing device used in the method for manufacturing a spectacle lens according to the present embodiment.

As shown in FIG. 4A, the laser processing device used in the present embodiment includes a laser beam source unit 21, an AOM (Acousto Optics Modulator) system unit 22, a beam shaper unit 23, a galvano scanner unit 24, and an optical system 25, and the AR film 13 is irradiated with laser beam through each of these units 21 to 25.

The laser beam source unit 21 emits a laser beam used for laser processing and is configured to emit an ultrashort pulse laser.

In the present embodiment, there is no particular limitation on the lower limit of the pulse width of the ultrashort pulse laser, and it is sufficient as long as the pulse width exceeds at least 0 femtoseconds, and 0.01 pico (10 femto) seconds or more is preferable. The use of the ultrashort pulse laser with a pulse width of 0.1 picoseconds or more (including 1 picosecond or more) is advantageous in terms of equipment maintenance and cost and is more suitable for commercial use.

For example, the ultrashort pulse laser with a pulse width of 0.01 picoseconds or more and less than 100 picoseconds, preferably a pulse width of 0.01 picoseconds or more and less than 50 picoseconds, more preferably a pulse width of 0.01 picoseconds or more and less than 15 picoseconds, can be used.

Further, for example, the ultrashort pulse laser with a pulse width of 0.1 picoseconds or more and less than 100 picoseconds, preferably a pulse width of 0.1 picoseconds or more and less than 50 picoseconds, more preferably a pulse width of 0.1 picoseconds or more and less than 15 picoseconds, can be used.

Further, the ultrashort pulse laser with a pulse width of 0.01 picosecond or more and less than 1 picosecond (or less than 0.1 picosecond), can also be used.

As the wavelength of the ultrashort pulse laser, for example, in addition to 355 nm of THG (Third Harmonic Generation) or 532 nm of SHG (Second Harmonic Generation), a fundamental wavelength 1064 nm can be used. In irradiation, an irradiation beam diameter can be selected depending on a desired processing design. In order to apply processing to a minute design with high resolution, it is effective to narrow down a beam diameter to a small size, and in this case, shorter wavelengths are more advantageous, and therefore among the above wavelengths, 532 nm is preferable, and 355 nm is more preferable, or 266 nm of FHG (Forth Harmonic Generation) is also suitable.

The pulse energy of the ultrashort pulse laser is, for example, 0.1 µJ or more and 30 µJ or less (maximum about 60 µJ) at 50 kHz. The beam diameter of the ultrashort pulse laser is, for example, 10 µm or more and 30 µm or less.

According to this study, the following was found regarding laser irradiation conditions.

(1) When the pulse width of ultrashort pulse laser is less than 0.1 picosecond:
   Good processing can be performed at any wavelength from 266 to 1064 nm. Shorter wavelengths are more advantageous in microfabrication. However, a production load is large, including an initial investment for equipment and a running cost.
(2) When the pulse width of the ultrashort pulse laser is 0.1 picosecond or more and less than 1 picosecond:
   Good processing can be performed at any wavelength from 266 to 1064 nm. A shorter wavelength is more advantageous in microfabrication.
(3) When the pulse width of the ultrashort pulse laser is 1 picosecond or more and less than 100 picoseconds:
   Good processing can be performed at any wavelength from 266 to 1064 nm. It is also suitable in terms of equipment cost and stability of production conditions. Within this wavelength range, shorter wavelengths are more advantageous in microfabrication.
(4) When the pulse width of the ultrashort pulse laser is 100 picoseconds or more and less than 1 nanosecond:
   Depending on the applied wavelength, non-uniformity occurs in processing stability. For example, when a short wavelength of 266 nm is used as an applicable wavelength, the reaction of SnOz may cause a damage to an underlying layer. Further, even at 355 nm, slight variations in irradiation conditions can cause loss of uniformity in processing, and it is impossible to prevent the removal processing from reaching the underlying layer below the SnOz layer.
(5) When the pulse width of the ultrashort pulse laser is 1 nanosecond or more:
   The SnO₂ layer and the layer on more surface side than the SnO₂ layer cannot be selectively and stably removed.

In the above cases (4) and (5), the visibility of the processed pattern is affected. For example, in the spectacle lens, there is a risk of interfering with a wearer's vision. Further, when observing the formed decorative pattern, incomplete visibility that occurs not through a clear lens but through a lens with a foreign object or dirt is likely to occur, unless the lighting condition is such that the pattern is clearly visible to the observer.

In order to prevent the above inconvenience, it is important that the removal processing using the ultrashort pulse laser is uniform in processing diameter and processing depth. For that purpose, with use of a predetermined ultrashort pulse width, it is effective to control and utilize the duration of energy due to irradiation and the delay in ablation of the underlying layer material, by using a predetermined ultrashort pulse width.

As long as such an ultrashort pulse laser can be emitted, any specific configuration or combination of the wavelength and pulse width of the laser beam source unit 21 may be used.

The AOM system unit 22 suppresses excessive irradiation of laser beam, which causes uneven processing during laser processing, by canceling a beam output of the laser beam immediately after the operation of the galvano scanner unit 24 starts and just before the operation ends.

The beam shaper unit 23 realizes laser processing using a laser beam with uniform energy distribution, by converting the laser beam from the laser beam source unit 21 to a top-hat type energy distribution from a Gaussian-type energy distribution.

Particularly, use of the top-hat type distribution realizes stable and uniform processing when forming a predetermined processing area by partially overlapping a plurality of beam spots. This is because local excess energy addition caused by spot overlap is suppressed.

The galvano scanner unit 24 allows desired pattern marking to be applied on an optical surface by laser processing using laser scan to move a position of a laser beam emitted from the laser light source unit 21 two or three dimensionally. It is assumed that a scannable range (i.e. a maximum laser processing area) 4 using the laser beam by the galvano scanner unit 24 is set to a size and shape that can completely encompass an outer shape of the spectacle lens to be processed (see FIG. 1).

The optical system 25 is configured by combining optical lenses such as a telecentric lens and mirror, to guide the laser beam from the laser beam source unit 21 so that the laser beam reaches a part of the spectacle lens to be processed.

Further, as shown in FIG. 4B, the laser processing device used in the present embodiment is configured so that the laser beam (i.e. ultrashort pulse laser) irradiation to the AR film 13 via the optical system 25 etc., can be performed with a defocus setting. The defocus setting means that a focal position F of the laser beam to be irradiated is set a predetermined defocus distance away from the surface of the AR film 13, which is the part to be processed by the laser beam. When performing the laser beam irradiation with such a defocus setting, the beam energy can be dispersed on the surface of the AR film 13 that is irradiated with the laser beam, and this realizes uniform film removal processing. This is particularly useful when the height of the irradiated area may vary due to the surface shape of the AR film 13. However, the setting of the laser beam irradiation is not necessarily limited to defocus setting. For example, the laser beam irradiation may be performed with a focus setting in which the focal position F matches the surface of the AR film 13, or an in-focus setting in which the focal position F leaves in the opposite direction to the defocus setting.

Next, a procedure for laser processing performed using the laser processing device configured as described above will be explained.

For laser processing, first, a spectacle lens to be processed is set in a laser processing device. At this time, the spectacle lens is set so that the optical surface of the spectacle lens, more specifically, the surface of the AR film 13 on the optical surface becomes the surface to be processed. The optical surface to be processed may be either an object-side surface or an eyeball-side surface, but here, for example, the eyeball-side surface is assumed to be the processing surface.

After setting the spectacle lens, the laser beam source unit 21 and the galvano scanner unit 24 are operated based on pattern data prepared in advance (i.e. pattern data with a predetermined resolution created based on the decorative pattern to be obtained). Thereby, the processing area of the surface to be processed of the spectacle lens is irradiated with the ultrashort pulse laser in a pattern shape corresponding to the decorative pattern.

When irradiated with the ultrashort pulse laser, the ultrashort pulse laser passes through a water-repellent film 14 on the surface to be processed of the spectacle lens and reaches the AR film 13 on the surface to be processed. When the ultrashort pulse laser reaches the AR film 13, non-heat processing by the ultrashort pulse laser is performed on the AR film 13.

The ablation processing of the present embodiment is a technique that allows processing to be performed with high energy efficiency using a multiphoton absorption phenomenon of the ultrashort pulse laser, and more specifically, this is a removal processing in which the area irradiated with laser beam is instantly melted, evaporated, or sublimated and scattered, while minimizing an influence of heat around the processing area. According to such non-heat processing, highly reactive materials are instantly removed at the irradiated area, and therefore there is less thermal influence on the area around the processing area, and processing can be performed with less thermal damage (deformation due to heat, etc.).

The laser processing according to the present embodiment is ablation processing that is non-heat processing. Such processing causes a multiphoton absorption process (eg, two-photon absorption process) that generates the multiphoton absorption phenomenon described above. Therefore, even a material that is relatively transparent (having high transmittance) to laser can be processed efficiently and favorably by multiphoton absorption. In this case, the range of usable laser wavelengths is wide, and as the wavelength of the laser beam, 1064 nm can be advantageously used in addition to 355 nm (THG) and 532 nm (SHG).

As described above, picosecond laser and femtosecond laser with short pulse widths are advantageous for inducing the multiphoton absorption. As a specific numerical value, for example, the pulse width can be less than 100 picoseconds, preferably less than 50 picoseconds, and more preferably less than 1 picosecond (ie, femtosecond).

When the non-heat processing is performed by ultrashort pulse laser irradiation, in the AR film 13, ultrashort pulse laser passes through the SiOz layer in the multilayer structure constituting the AR film 13, reaches the reactive layer (SnOz layer in the present embodiment). Then, the reactive layer sublimes/evaporates due to its instant reaction, and the outermost SiOz layer 13a is removed. In this way, only a predetermined layer including the outermost surface layer of the anti-reflection film is partially removed in a pattern shape corresponding to the decorative pattern. This causes the corresponding portion of the water-repellent film 14 also to be removed. Thereby, the underlying ZrOz layer 13c below the SnOz layer 13b is exposed at the irradiated area.

By performing laser processing as described above, a predetermined layer including the SiOz layer 13a, which is the outermost layer of the AR film 13, is partially removed (thereby forming a removed portion), and the ZrOz layer 13c as a high refractive index layer is exposed. Thus, decorative pattern marking is applied to the spectacle lens surface to be processed.

As described above, the irradiated area where the predetermined laser irradiation is applied, is partially processed within the surface to be processed.

### (3) Configuration of the spectacle lens

Next, the configuration of the spectacle lens obtained by the manufacturing method according to the procedure described above, that is, the configuration of the spectacle lens according to the present embodiment, will be specifically described.

FIG. 5A is an explanatory view showing a configuration example of a main part of a spectacle lens according to the present embodiment.

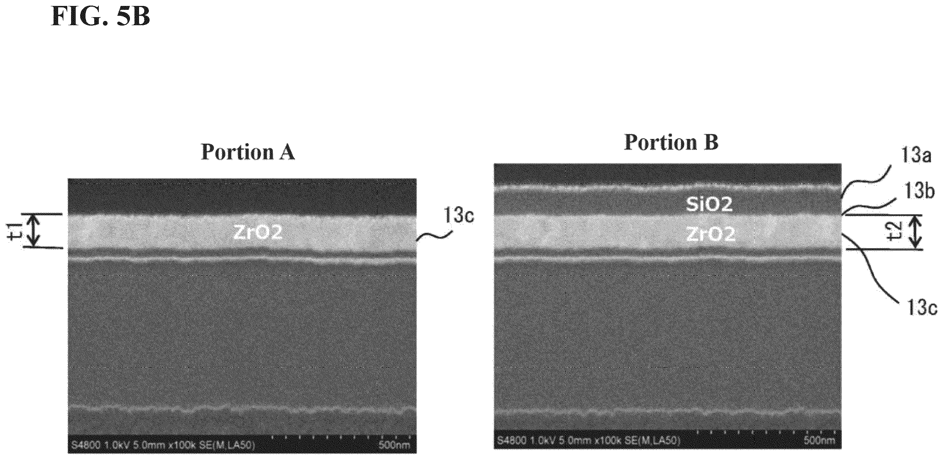

FIG. 5B shows one specific example of an observation result of a cross section of the AR film using an electron microscope. The illustrated example is an enlarged display of portions A and B in FIG. 5A and shows electron microscope images of the laser scan area 16 and the non-processing area 15.

As shown in FIG. 5A, the spectacle lens according to the present embodiment is configured by laminating the HC film 12, the AR film 13, and the water-repellent film 14 in this order on the optical surface of the lens base material 11. The AR film 13 has a multilayer structure in which the SiO₂ layer 13a, which is a low refractive index layer, and the SnOz layer 13b and the ZrOz layer 13c, which are high refractive index layers, are laminated, and is constituted such that a predetermined layer including the SiOz layer 13a which is the outermost layer of the multilayer structure (specifically, the SnOz layer which is the reactive layer, and a more surface side layer than the SnOz layer) is partially removed to expose the ZrOz layer 13c, which is a high refractive index layer. That is, the spectacle lens according to the present embodiment is configured, with the optical surface of the lens base material 11 including: a non-processing area 15 coated with the HC film 12, AR film 13 and the water-repellent film 14; and a laser scan area (patterned area) 16 where the outermost SiO₂ layer 13a of the AR film 13, the underlying SnO₂ layer 13b immediately below the SiOz layer 13a, and the water-repellent film 14 are partially removed to expose the ZrOz layer 13c, which is a high refractive index layer.

The non-processing area 15 and the laser scan area 16 have different light reflectance depending on the presence or absence of the SiO₂ layer 13a, because one of them is coated with the SiOz layer 13a, and the other of them has the exposed ZrOz layer 13c (or the reactive layer, which is a high refractive index layer, when the reactive layer partially remains). Therefore, when the spectacle lens is irradiated with illumination light and viewed externally, the pattern shape formed by the laser scan area 16 can be visually recognized. That is, when the laser scan area 16 is formed in a pattern shape corresponding to the decorative pattern, the decorative pattern can be visually recognized. In this way, the removed portion of the predetermined layer of the AR film 13 can be used as a part constituting the decorative pattern.

The laser scan area 16 constituting the decorative pattern is formed by removing the SiOz layer 13a, which is the outermost layer of the AR film 13, and the SnOz layer 13b, which is the layer immediately below the SiOz layer 13a. That is, the layer to be removed is stopped at a predetermined layer including the SnOz layer, which is a reactive layer. Therefore, peeling of each layer of the multilayer structure constituting the AR film 13 due to the formation of the laser scan region 16, can be suppressed.

As described above, the removal of the SiO₂ layer 13a, which is the outermost layer of the AR film 13, can be achieved by non-heat processing using ultrashort pulse laser irradiation. According to such non-heat processing, there is little thermal influence on the periphery of the processing area, and the occurrence of thermal damage can be suppressed. Further, by applying the above predetermined pulse width, stable processing can be performed while suppressing damage to the underlying layers below the reactive layer. This exposes the ZrOz layer 13c as a high refractive index layer, but damage to the exposed surface of the ZrO₂ layer 13c can be suppressed.

By suppressing the damage to the exposed surface of the ZrO₂ layer 13c, decrease in film thickness of the ZrO₂ layer 13c due to removal processing can also be suppressed. The thicknesses of the SiOz layer 13a, SnO₂ layer 13b, ZrO₂ layer 13c, etc., can be determined by acquiring an electron microscope image of the cross section of the AR film 13 and analyzing the acquired image.

FIG. 5B shows one specific example of the results of observation of the cross section of the AR film 13 using the electron microscope. The illustrated example is an enlarged display of portions A and B in FIG. 5A, showing electron microscope images of the laser scan area 16 and the non-processing area 15. In the non-processing area 15, the SiOz layer 13a, the SnOz layer 13b, and the ZrOz layer 13c are laminated. However, since the SnOz layer 13b is thin (for example, about 5 nm), it is difficult to recognize it in the image. On the other hand, in the laser scan area 16, the SnOz layer 13b and the SiOz layer on more surface side than the SnOz layer 13b are removed, thereby exposing the ZrOz layer 13c.

Regarding the thickness of the ZrOz layer 13c exposed by removing the SnOz layer and the layer on more surface side than the SnOz layer, the illustrated electron microscope image shows that there is no significant difference between the thickness t1 at the laser scan area 16 and the thickness t2 at the non-processing area 15. More specifically, the ratio t1/t2 of the thickness t1 at the removed portion to the thickness t2 at the non-removed portion is, for example, within a range of 0.90 or more and 1.00 or less, preferably within a range of 0.95 or more and 1.00 or less, more preferably, within a range of 0.99 or more and 1.00 or less.

As described above, the ZrO₂ layer 13c, which is the exposed high refractive index layer, has no decrease in film thickness due to removal processing, or even if there is a decrease, the amount of decrease is suppressed to be extremely small. This is because the laser scan area 16 is formed by non-heat processing using ultrashort pulse laser irradiation, and no damage is caused to the underlying ZrOz layer 13c. This means that when the thickness ratio t1/t2 of the exposed ZrO₂ layer 13c is within the above range, the laser scan area 16 is formed without damaging the ZrO₂ layer 13c, and that the laser scan area 16 was formed by non-heating processing using ultrashort pulse laser.

The reason why no damage occurs to the ZrO₂ layer 13 is that the reactivity of the reactive layer (here, the SnOz layer) caused by the ultrashort pulse laser is higher than that of the ZrO₂ layer. Such a difference in reactivity is remarkable by using ultrashort pulse laser with a predetermined pulse width, as will be described later.

The thickness of the ZrOz layer is 10x or more, preferably 15x or more than the thickness of the SnOz layer. Therefore, even when the ZrOz layer is slightly thinned after the SnOz layer disappears, there is no risk of film peeling and there is no effect on the visibility of the decorative pattern.

Further, the melting point of the SnOz layer is lower than that of the overlying SiOz layer and significantly lower than that of the underlying ZrOz layer, and this is considered to be related to the ease of control of ablation.

According to the spectacle lens configured as described above, even when decorative pattern marking is applied, peeling of each layer constituting the multilayered AR film 13 can be suppressed, and the exposed ZrOz layer 13c is not damaged. Therefore, even when applied to a spectacle lens product, decorative pattern marking is enabled on the spectacle lens without deteriorating the quality of the product.

The relationship between the difference in pulse width and whether marking on an optical member is enabled without deteriorating the quality of the optical member will be explained below. In the following figures, white portions (eg, dot patterns) indicate the laser scan area 16, and the blue (black) portions indicate the non-processing area 15. Hereinafter, marking processing will also be referred to as laser processing.

### (Femtosecond pulse width)

A laser processing test was performed to the AR film 13 in the non-processing area 15 of the spectacle lens 1 (here, a double-sided plano lens) shown in FIG. 5B, with a pulse width set as 100 femtoseconds or more and less than 1 picosecond. At that time, each test was performed after setting the wavelength of the laser beam to 1064 nm (infrared region, first harmonic) and 532 nm (green region, second harmonic).

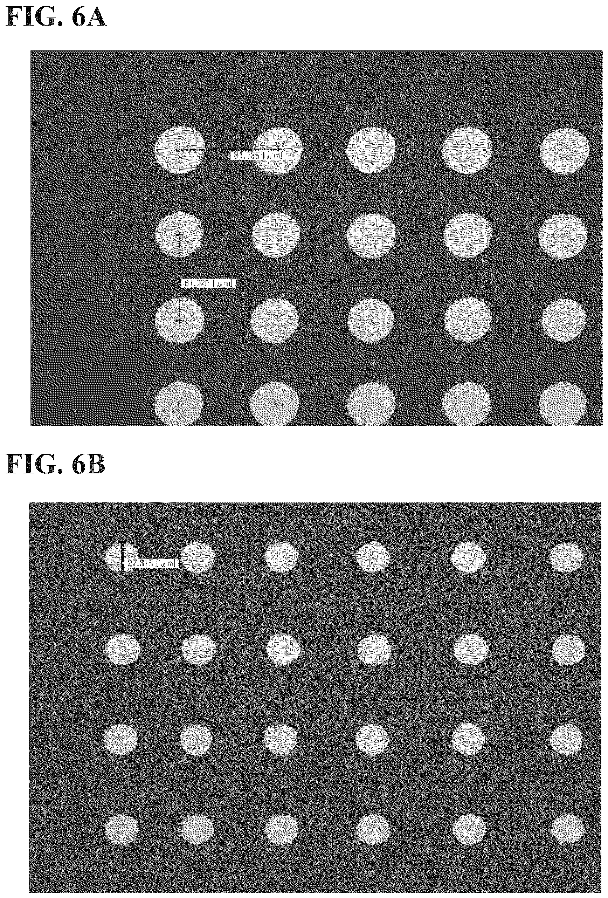

FIG. 6A is a micrograph (magnification: 200x) showing the results of a test performed to the AR film 13 of the spectacle lens 1 shown in FIG. 5B, in which a dot pattern is formed, with a wavelength of the laser beam set as 1064 nm, and a pulse width set as 100 femtoseconds or more and less than 1 picosecond.

FIG. 6B is a micrograph (magnification: 200x) showing the results of a test performed to the AR film 13 of the spectacle lens 1 shown in FIG. 5B, in which a dot pattern is formed, with a wavelength of the laser beam set as 532 nm, and a pulse width set as 100 femtoseconds or more and less than 1 picosecond. A processing diameter by the laser beam is about 27 µm.

As shown in FIGS. 6A and 6B, when the pulse width was set as 100 femtoseconds or more and less than 1 picosecond, stable removal processing with uniform diameter and depth could be performed. Particularly, as shown in FIG. 6B, when the wavelength of the laser beam was low, it was easier to perform small diameter processing, and the effect was more significant.

### (Pulse width in picoseconds)

A laser processing test was performed to the AR film 13 of the spectacle lens 1 shown in FIG. 5B, with a pulse width set as 10-odd picoseconds. At that time, each test was performed after setting the wavelength of the laser beam to 1064 nm (infrared region, first harmonic), 532 nm (green region, second harmonic), and 355 nm (ultraviolet (UV) region, third harmonic).

The "10" in " 10-odd picoseconds " is a value in a range of more than 10 and less than 20.

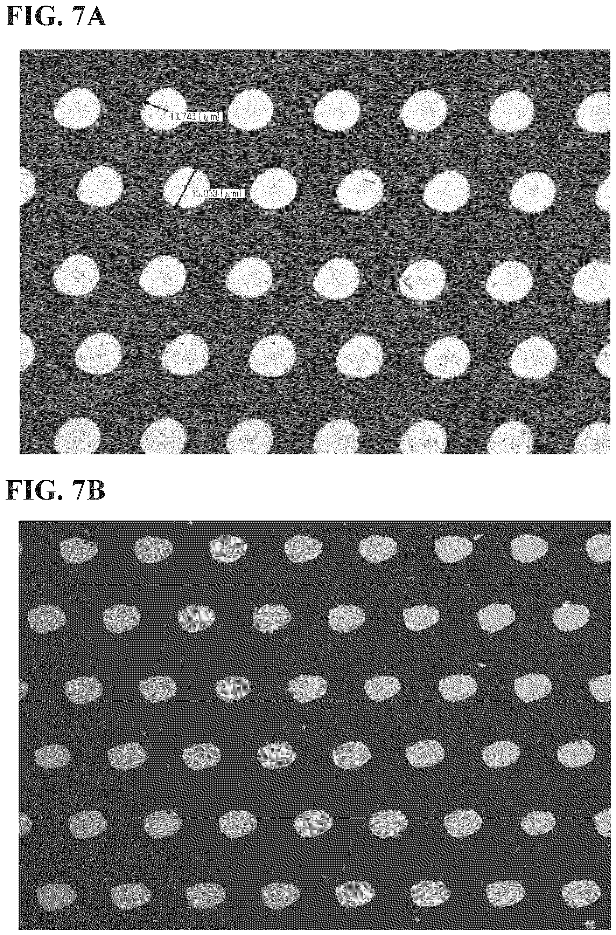

FIG. 7A is a micrograph (magnification: 200x) showing the results of a test performed the AR film 13 of the spectacle lens 1 shown in FIG. 5B, in which a dot pattern is formed, with a wavelength of the laser beam set as 1064 nm and a pulse width wet as 10-odd picoseconds.

FIG. 7B is a micrograph (magnification: 200x) showing the results of a test performed to the AR film 13 of the spectacle lens 1 shown in FIG. 5B, in which a dot pattern is formed, with a wavelength of the laser beam set as 532 nm and a pulse width set as 10-odd picoseconds.

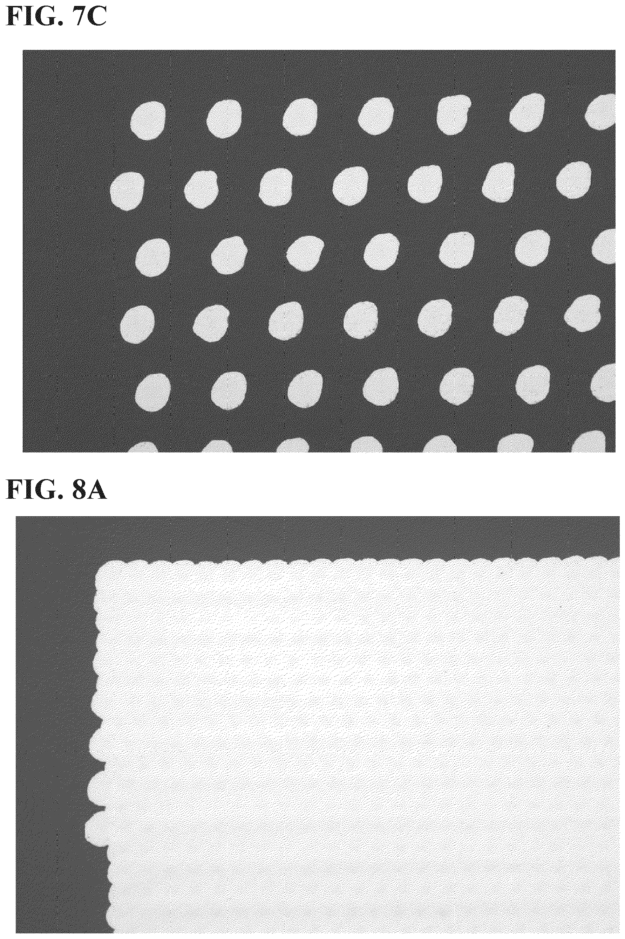

FIG. 7C is a micrograph (magnification: 200x) showing the results of a test performed to the AR film 13 of the spectacle lens 1 shown in FIG. 5B, in which a dot pattern is formed, with a wavelength of the laser beam set as 355 nm, and a pulse width set as 10-odd picoseconds.

As shown in FIGS. 7A, 7B and 7C, when the pulse width was set as 10-odd picoseconds, a stable removal processing and marking on the optical member could be performed.

In FIGS. 7A and 7B, the defocus is +3 mm. Normally, a defocus condition of up to ±1 mm is sufficiently applicable. That is, according to the present embodiment, stable marking on the optical member is enabled even with a focus fluctuation, without causing a deterioration in the quality of the optical member.

"Several tens" is a value in the range of 20 or more and less than 90.

FIG. 8A is a micrograph (magnification: 200x) showing the results of a test for performing removal processing in which the AR film 13 of the spectacle lens 1 shown in FIG. 5B was removed with overlapping dot patterns without gaps, with a wavelength of the laser beam set as 355 nm, and a pulse width set as 10-odd picoseconds. The SnOz reactive layer and the SiOz layer on more surface side than the SnOz reactive layer were removed uniformly, and good processing was achieved.

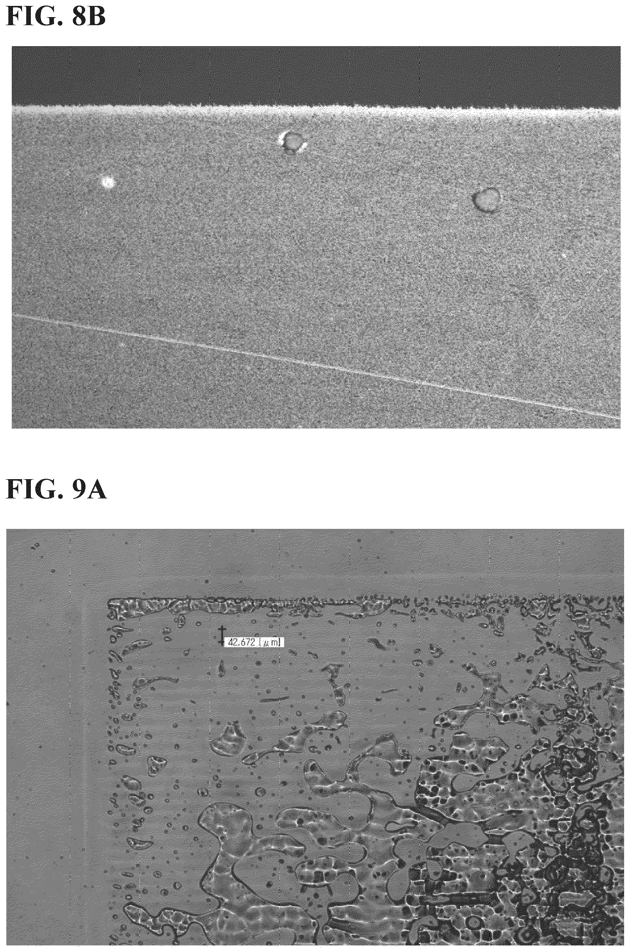

FIG. 8B is a micrograph (magnification: 200x) showing the results of a test for performing removal processing in which the AR film 13 of the spectacle lens 1 shown in FIG. 5B was removed with overlapping dot patterns without gaps, with a wavelength of the laser beam set as 532 nm, and a pulse width set as several tens of picoseconds.

As shown in FIGS. 8A and 8B, when the pulse width was set as 10-odd picoseconds or several tens of picoseconds, marking on the optical member was enabled. Particularly, in FIG. 8B, damage occurred locally on the underlying layer below the SnOz layer, but as shown in FIG. 8A, when the pulse width was set as 10-odd picoseconds, uniform removal could be performed.

### (Nanosecond pulse width)

A laser processing test was performed to the AR film 13 of the spectacle lens 1 shown in FIG. 5B, with a pulse width set as 10-odd nanoseconds. At that time, each test was performed after setting the wavelength of the laser beam to 355 nm (ultraviolet (UV) region, third harmonic) and 266 nm (deep ultraviolet (DUV) region, fourth harmonic).

FIG. 9A is a micrograph (magnification: 50x) showing the results of a test performed to the AR film 13 of the spectacle lens 1 shown in FIG. 5B, in which a dot pattern is formed, with a wavelength of the laser beam set as 355 nm and a pulse width set as 10-odd nanoseconds.

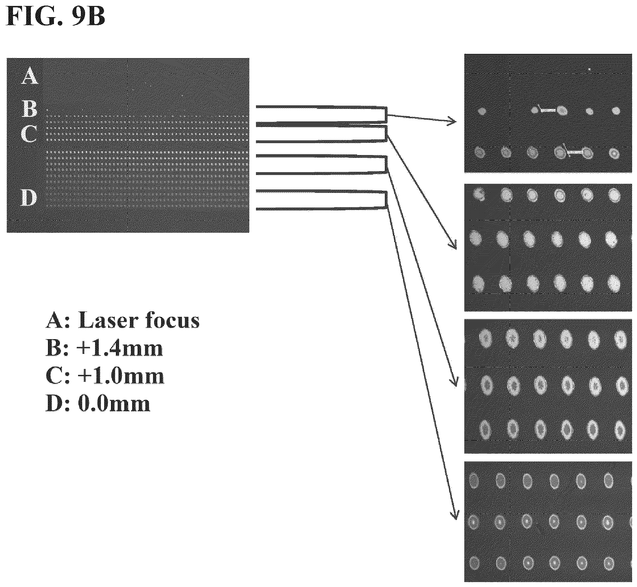

FIG. 9B is a micrograph (magnification: 50x on the left side, 500x on the right side) showing the results of a test performed to the AR film 13 of the spectacle lens 1 shown in FIG. 5B, in which a dot pattern is formed, with a wavelength of the laser beam set as 266 nm and a pulse width set as 10-odd nanosecond.

As shown in FIG. 9A, when the pulse width was set to 10-odd nanoseconds and the laser output was small, the processing itself could not be performed. When the laser power was increased to a level where processing could be performed, damage occurred to the underlying ZrO₂ layer.

Due to unstable processing conditions and damage to the underlying layer, the decorative pattern is more visible to the wearer of the spectacle lens than in the spectacle lens 1 of the present embodiment, thereby obstructing a field of view, resulting in involving a problem of impairing the function of the spectacles. Further, compared to the spectacle lens 1 of the present embodiment, film peeling likely to occur at the processed portion, resulting in the deterioration of weather resistance and chemical resistance.

As shown in FIG. 9B, although the processing itself could be performed by changing the focus of the laser beam, the processing was highly uneven, and depending on the focus, damage to the underlying layer occurred more than expected. Uniform and stable processing to a desired depth was difficult.

According to the present embodiment, one or more of the following effects can be obtained.

(a) In the present embodiment, decorative pattern marking is applied on the spectacle lens by performing processing to the AR film 13, which is one of the thin films coating the optical surface of the lens base material 11, in such a manner that the reactive layer (SnOz layer in the above embodiment) of the AR film 13 and the layer on more surface side than the reactive layer are partially removed, thereby exposing the ZrO₂ layer 13c, which is a high refractive index layer.
(b) In the present embodiment, decorative pattern marking is applied on the spectacle lens, by performing non-heat processing using ultrashort pulse laser irradiation in such a manner that the reactive layer (SnOz layer in the above embodiment) of the AR film 13 and the layer on more surface side than the reactive layer are partially removed, thereby exposing the ZrO₂ layer 13c which is a high refractive index layer. According to such non-heat processing, only a predetermined layer including the SiOz layer 13a which is the outermost layer of the AR film 13, can be selectively and uniformly removed, because the removal processing is performed by the effect of the pulse width rather than the effect of absorbed energy of the laser beam. In addition, due to non-heating processing, heat damage is prevented from occurring around the processing area, thereby preventing damage to the exposed surface of the ZrO₂ layer 13c that is an underlying layer below the reactive layer.
(c) As described above, in the present embodiment, decorative pattern marking is applied on the spectacle lens, by removing a predetermined layer including the outermost layer of the AR film 13 using an ultrashort pulse laser, thereby exposing the high refractive index layer. Therefore, according to the present embodiment, peeling of each layer of the AR film 13 can be suppressed, and the exposed ZrOz layer 13c is not damaged. Therefore, even when applied to a spectacle lens product, decorative pattern marking on the spectacle lens is enabled without deteriorating the quality of the product.
(d) In the present embodiment, the pulse width of the ultrashort pulse laser may be more than 0 femtoseconds, and preferably 0.01 pico (10 femto) seconds or more and less than 100 pico seconds, and use of 0.1 picoseconds or more (including 1 picoseconds or more) is advantageous in terms of equipment maintenance and cost, and is more suitable for commercial use.

More specifically, regarding a laser irradiation condition, there are the following advantages depending on the pulse width.
(1) When the pulse width of the ultrashort pulse laser is less than 0.1 picosecond:
   Good processing can be performed at any wavelength from 266 to 1064 nm. Shorter wavelengths are more advantageous in microfabrication. However, a production load is large in terms of equipment maintenance and cost.
(2) When the pulse width of the ultrashort pulse laser is 0.1 picosecond or more and less than 1 picosecond:
   Good processing can be performed at any wavelength from 266 to 1064 nm. A shorter wavelength is more advantageous in microfabrication.
(3) When the pulse width of the ultrashort pulse laser is 1 picosecond or more and less than 100 picoseconds:
   Good processing can be performed at any wavelength from 266 to 1064 nm.
   Shorter wavelengths are more advantageous in microfabrication, and suitable for equipment maintenance, cost, stability of production conditions, etc.

(e) In the present embodiment, in non-heat processing by ultrashort pulse laser irradiation, the AR film 13 is irradiated with the ultrashort pulse laser, with a defocus setting. When the laser beam is emitted with such a defocus setting, beam energy can be dispersed on the surface of the AR film 13 irradiated with the laser beam, thereby enabling uniform film removal processing. This is particularly useful when the height of the irradiated area may vary due to the surface shape of the AR film 13.
(f) In the present embodiment, non-heat processing is performed by ultrashort pulse laser irradiation under a specified condition, and therefore damage to the exposed surface of the ZrO₂ layer 13c can be suppressed, the ZrOz layer 13c being a high refractive index layer that is exposed by removing the SnOz layer and the layers on more surface side than the SnOz. Specifically, the ratio t1/t2 of the thickness t1 of the ZrOz layer 13c at the removed portion and the thickness t2 of the ZrO₂ layer 13c at the non-removed portion such as the SiOz layer 13 falls, for example, within a range of 0.90 or more and 1.00 or less, preferably within a range of 0.95 or more and 1.00 or less, and more preferably within a range of 0.99 or more and 1.00 or less. Thus, the ZrO₂ layer 13c has no decrease in film thickness due to the removal processing, or even when there is a decrease, the amount of decrease is suppressed to be extremely small. Accordingly, when applied to a spectacle lens product, this is very preferable for applying decorative pattern marking on the spectacle lens without deteriorating the quality of the product.

### (5) Modified example, etc.

The embodiments of the present invention have been described above, and the disclosures described above indicate exemplary embodiments of the present invention. That is, the technical scope of the present invention is not limited to the above-described exemplary embodiments, and can be modified in various ways without departing from the gist thereof.

In the embodiment described above, the optical member is a spectacle lens, but the present invention is not limited thereto. That is, the invention can be applied in exactly the same way to an optical member other than the spectacle lens.

The above-described embodiment shows the case where decorative pattern marking is performed by non-heating processing using the ultrashort pulse laser, but the present invention is not limited thereto. That is, non-heat processing using the ultrashort pulse laser may be used as long as it is for patterning the optical surface of an optical member, and can be applied in exactly the same way other than the decorative pattern marking.

The above-described embodiment shows the case where the outermost layer of the AR film 13 is the SiO₂ layer 13a as a low refractive index layer, and the underlying layer below the SiOz layer 13a is the SnOz layer 13b as a high refractive index layer, and there is a further underlying ZrO₂ layer 13c as a high refractive index layer below the SnO₂ layer 13b, and when the SnOz layer reacts and is partially removed by laser irradiation, this causes the SiOz layer also to be removed, thereby exposing the ZrO₂ layer 13c as a high refractive index layer. However, the present invention is not limited thereto. The AR film 13 may be constituted by laminating layers other than the SiOz layer 13a, the SnOz layer 13b, and the ZrOz layer 13c. Further, the outermost layer of the AR film 13 may be a layer other than the SiOz layer 13a as long as it is a low refractive index layer. A high refractive index layer may be a layer other than the SnOz layer 13b or the ZrOz layer 13c. For example, regarding the SnO₂ layer 13b as a reactive layer, a thin ITO layer having conductivity may be used instead of the SnOz layer 13b.

The above-described embodiment shows the case where the SnO₂ layer, which is a reactive layer included in the AR film 13, and the SiOz layer 13a, which is the outermost layer immediately above the SiOz layer 13a, are removed by non-heat processing using ultrashort pulse laser. Thereby, the effect of suppressing film peeling can be exhibited, as described above. Thus, the non-heat processing using the ultrashort pulse laser can be performed to remove multiple predetermined layers including the outermost layer. Even when removing multiple layers including the outermost layer, non-heat processing using ultrashort pulse laser can suppress damage to the exposed surface of the layer that will be exposed by removal, and therefore a decrease in film thickness due to removal processing can also be suppressed. That is, even when removing multiple layers including the outermost layer, the underlying layer immediately below the removed layer is constituted so that the ratio t1/t2 of the thickness t1 at the removed portion to the thickness t2 at the non-removed portion is, for example, within a range of 0.90 or more and 1.00 or less, preferably within a range of 0.95 or more and 1.00 or less, more preferably within a range of 0.99 or more and 1.00 or less. This means that the present disclosure includes the following inventive concept. That is, according to the present disclosure, there is provided an optical member including:
an optical base material with an optical surface; and
an anti-reflection film coating the optical surface of the optical base material,
wherein the anti-reflection film has a multilayer structure, with at least one layer constituting the multilayer structure partially removed, and
an underlying layer immediately below the at least one layer is constituted so that a ratio t1/t2 of a thickness t1 at a removed portion to a thickness t2 at a non-removed portion falls within a range of 0.90 or more and 1.00 or less.

The spectacle lens before laser processing in the present embodiment may include an anti-reflection film on both sides. The content of one specific example of the spectacle lens is described in International Publication No. WO2020/067407. An entire description of this publication can be referred to herein. Particularly, the spectacle lenses having the configurations of examples 1 and 2 described in the publication (example 1 if it would be better to choose) may be employed as one specific example. The specific example of the spectacle lens before decoration in the present embodiment is as follows.

One specific example of a spectacle lens is a spectacle lens including a multilayer film on both sides of a lens base material,
wherein the sum of average reflectance in a wavelength band of 360 to 400 nm on each surface of the spectacle lens is 6.0% or less,
the sum of average reflectance in a wavelength band of 400 to 440 nm on each surface of the spectacle lens is 20.0% or more, and
the sum of average reflectance in a wavelength band of 480 to 680 nm on each surface of the spectacle lens is 2.0% or less.

That is, regarding the light in a blue region, particularly the light in a violet region (400 to 440 nm) that should be blocked, the sum of the average reflectance on each surface is 20.0% or more (preferably more than 20.0%, more preferably 25.0% or more). That is, the reflectance is locally increased in the violet region.

Instead, in the ultraviolet region or on a low wavelength side of the violet region (360 to 400 nm), the sum of the average reflectance on each surface is 6.0% or less (preferably less than 6.0%, more preferably 5.0% or less), and contrary to the case in the violet region (400 to 440 nm), the reflectance is locally reduced.

Further, in a high wavelength side of a blue wavelength region or in a red region (480 to 680 nm), the sum of the average reflectance on each surface is 2.0% or less (preferably less than 2.0%, more preferably 1.5% or less), and in order to aim for the transmission of visible light, the reflectance is particularly locally reduced in a main wavelength band of the visible light.

With such a specific example, the transmission of visible light can be ensured while ensuring a blocking effect against the light in the blue region.

When the spectacle lens of this specific example is subjected to the laser processing according to the present embodiment, the following advantageous effects are exhibited. The spectacle lens of this specific example has a blocking effect against the light in the blue region, that is, has a high reflectance of the light in the blue region. Therefore, when the spectacle lens 1 is viewed from a third person facing the front of a wearer of the spectacle lens 1, the spectacle lens appears blue. On the other hand, the area subjected to laser processing (decorative pattern 3) appears to have the color of the layer exposed by the laser processing (the color of the ZrOz layer is yellow or gold in this specific example). As a result, for a third person facing the front of the wearer of the spectacle lens 1, the decorative pattern 3 on the spectacle lens 1 fitted into the frame, appears to stand out against the blue background. In that case, the decorative pattern 3 with a high design effect can be obtained. The same can be said even when the background is not blue, that is, when the reflectance of light in the blue region is not high but the reflectance of light in other color regions is high. As an example of the background color, when the spectacle lens 1 is viewed from a third person facing the front of the wearer of the spectacle lens 1, the spectacle lens 1 may be green or pearl-colored.

The aspect of good contrast when viewing the above decorative pattern 3 can be realized by laser processing applied to each multilayer film on the object side surface of the spectacle lens or by laser processing applied to each multilayer film on the eyeball side surface of the spectacle lens.

No matter which side of the multilayer film is laser-processed, there is virtually no interference in a visual field caused by the decorative pattern entering the wearer's visual field. That is, the spectacle lens provided with the decorative pattern 3 of the present embodiment does not impede a wearer's clear vision.

Further, when observing a wearer's lens from another person, the decorative pattern 3 is clearly visible when the wearer's lens is at a predetermined relative position (or angle) with respect to indoor illumination light or sunlight, but when the wearer's lens is not at the above relative position, it will be difficult to visually recognize the decorative pattern 3. Accordingly, an added value in terms of design can be added to the lens by the change of the visibility such that the predetermined decorative pattern 3 appears clearly or almost disappears.

On the other hand, when the wearer's lens does not have the above-described predetermined relative positional relationship, it is recognized as a normal clear lens (or prescribed colored lens, photochromic lens, polarized lens) when viewed by another person.

Even when the decorative pattern 3 of the present embodiment is formed within a frame-cut lens area, desired characters, symbols, or designs can be carried on the lens, or a desired design can be applied to the lens, without affecting the function of the spectacles.

Processing of applying the decorative pattern 3 of the present embodiment is a processing such that the decorative pattern 3 can be visually recognized both from the processing surface side of the lens and from the back surface side of the lens. The reason is as follows. In a multilayered anti-reflection film, designed anti-reflection properties are reduced at the removed portion where the film is partially removed (SnOz layer and overlying SiOz layer above the SnOz layer are removed in the present embodiment), and a contrast in the amount of reflected light can be obtained between the removed portion and the non-removed portion.

Therefore, the technical idea of the present invention applies to a spectacle lens, which is an optical member manufactured by the method for manufacturing an optical member according to the present embodiment, or also applies to spectacles in which the spectacle lens, which is the optical member according to the present embodiment, is fitted into a frame.

### Description of signs and numerals

1... Spectacle lens (optical member), 2... Frame shape, 3... Decorative pattern, 4... Scannable range, 11... Lens base material (optical base material), 12... HC film, 13... AR film, 13a... SiO₂ layer (low refractive index layer), 13b...SnOz layer (high refractive index layer), 13c...ZrOz layer (high refractive index layer), 14...Water repellent film, 15...Unprocessing area, 16... Laser scan area (patterned area), 21... Laser beam source unit, 22... AOM system unit, 23... Beam shaper unit, 24... Galvano scanner unit, 25... Optical system

## Claims

1. A method for manufacturing an optical member, the method comprising:
applying desired laser processing to an anti-reflection film formed to coat an optical surface of an optical base material and having a multilayer structure including laminated layers of a low refractive index layer and a high refractive index layer, by
irradiating the anti-reflection film with ultrashort pulse laser; and
partially removing a predetermined layer including an outermost layer of the multilayer structure,
the ultrashort pulse laser having a pulse width of 10 femtoseconds or more and less than 100 picoseconds,
the anti-reflection film including a reactive layer that is relatively more reactive to irradiation with the ultrashort pulse laser than other layers included in the multilayer structure,
wherein the reactive layer is subjected to the laser processing so as to be visually recognizable by visible light by being at least partially removed.

2. The method for manufacturing an optical member according to claim 1, wherein in the removal of the reactive layer, the reactive layer disappears by subliming or evaporating at least partially in a thickness direction, and the disappearance of the reactive layer causes other overlying layer above the reactive layer also to be removed.

3. The method for manufacturing an optical member according to claim 1 or 2, wherein a high refractive index layer included in the multilayer structure is exposed at an irradiated portion where the reactive layer is removed by the irradiation.

4. The method for manufacturing an optical member according to any one of claims 1 to 3, wherein the reactive layer is a conductive layer having higher conductivity than other layers constituting the multilayer structure.

5. The method for manufacturing an optical member according to any one of claims 1 to 4, wherein the reactive layer contains Sn and O.

6. The method for manufacturing an optical member according to any one of claims 1 to 5, wherein the optical member is a spectacle lens.

7. The method for manufacturing an optical member according to any one of claims 1 to 6, wherein the ultrashort pulse laser has a pulse width of 0.1 picoseconds or more and less than 50 picoseconds.

8. An optical member, comprising:
an optical base material with an optical surface; and
an anti-reflection film coating the optical surface of the optical base material,
the anti-reflection film having a multilayer structure including laminated layers of a low refractive index layer and a high refractive index layer, and
the anti-reflection film including a reactive layer that has a relatively higher reactivity to ultrashort pulse laser irradiation than other layers included in the anti-reflection film,
wherein a removed portion is a portion resulting from at least partially removing a predetermined layer including an outermost layer of the multilayer structure, to which processing is applied so as to be visually recognizable by visible light, due to exposure of the underlying high refractive index layer below the reactive layer or exposure of the partially remained reactive layer.

9. The optical member according to claim 8, wherein the high refractive index layer exposed by removing the low refractive index layer is constituted so that a ratio t1/t2 of a thickness t1 at a removed portion of the low refractive index layer to a thickness t2 at a non-removed portion of the low refractive index layer falls within a range of 0.90 or more and 1.00 or less.

10. The optical member according to claim 8 or 9, wherein the processing for visually recognizing the reactive layer is a processing for the reactive layer to be visible from a processing surface side of the optical member subjected to the processing, and is also visible from a back side of the processing surface.

11. The optical member according to any one of claim 8 to claim 10, wherein visibility in the processing for visually recognizing the reactive layer changes depending on a relative position or an angle of an observer and an illumination light with respect to the optical member.

12. The optical member according to any one of claims 8 to 11, wherein the optical member is a spectacle lens.

13. Spectacles in which a spectacle lens that is an optical member manufactured by the method for manufacturing an optical member according to any one of claims 1 to 7, or a spectacle lens which is an optical member described in any one of claims 8 to 12, are fitted into a frame.
